# EUROPEAN PATENT SPECIFICATION

(11) **EP 3 879 160 B1**
(45) Date of publication and mention of the grant of the patent: **27.09.2023**
(21) Application number: 21157192.2
(22) Date of filing: 15.02.2021
(51) Int. Cl.: F16L 37/23

(54) **UNIVERSAL SAFETY COUPLER FOR PRESSURIZED SYSTEMS**
UNIVERSELLER SICHERHEITSKOPPLER FÜR DRUCKSYSTEME
COUPLEUR DE SÉCURITÉ UNIVERSEL POUR SYSTÈMES SOUS PRESSION

(30) Priority: 10.03.2020 IT 202000005083
(43) Date of publication of application: 15.09.2021
(73) Proprietor: Konfit Italia S.r.l. a socio unico, 25065 Lumezzane (BS) (IT)
(72) Inventor: ZANI, Angelo, I-25065 Lumezzane, Brescia (IT); ZANI, Anna, I-25065 Lumezzane, Brescia (IT)
(74) Representative: Gualeni, Nadia

(56) References cited:
- EP-A1- 0 536 434
- EP-A1- 0 664 866
- US-B1- 8 646 811

## Description

The object of the present invention is a universal safety coupler for connecting components in systems for pressurized fluids.

The present invention relates to couplers for quick connect fluid connectors and, more specifically, to couplers for quick hydraulic and pneumatic connectors which include features of universal couplers integrated with features of safety couplers in a new universal safety coupler.

The coupler and the connector are two members which, in the pneumatic field, are used to speed up the connection and the separation of components in a pressurized fluid system.

Specifically, the coupler is considered the female component, while the connector is considered the male component. Both these elements are used, for example, to allow a quick replacement of pipes or compressed air nozzles when using compressors.

Several standards are to be complied with in the field of pressurized fluid systems, among which ISO 4414, ISO 12100 and ISO 13849.

Standard ISO 4414 specifies the general rules and safety requirements for the components and pneumatic systems used on machinery. Such a standard relates to all the significant risks associated with pneumatic air systems and specifies the principles to apply in order to prevent such risks when operating machinery.

Generally, when designing pneumatic machinery for machines, also the standards ISO 12100 (standard specifying the dangers and defining the risk assessment method) and ISO 13849 (standard for designing and validating control components concerning the system safety) are to be considered. A coupler according to the preamble of the claimed invention is known from US 8 646 811 B1.

The main problem of the conventional couplers consists in the fact that there is no safety mechanism in the connector release step. Indeed, when the collar is retracted to allow the release of the connector, the pressure in the circuit downstream (i.e., in the circuit connected to the connector) induces the uncontrolled exit of the connector from the coupler, causing the well-known pipe whipping, which is often the cause of damage to systems and danger for the operating personnel.

There are couplers with safety mechanisms on the market, and therefore defined safety couplers, which at least partly comply with the above-mentioned reference standards, thus preventing the problem of the pipe whipping. However, such a problem of the pipe whipping is solved to the detriment of other essential functions, such as: the air flow rate (to maintain the volumes of the conventional coupler, the inner diameter is reduced to the detriment of the flow rate, which is decreased); the volumes (to keep the flow rate, the outer volumes are significantly increased), the interchangeability of the various profiles of the connector.

It is the object of the present invention to solve the problems of the conventional couplers and of the safety couplers on the market.

It therefore is the object of the present invention to make a universal safety coupler which complies with the above-mentioned reference standards while preventing the problem of pipe whipping and maintaining all the other essential functions, such as the air flow rate, volumes and the interchangeability of the various profiles of the connector.

Such an object is achieved by a universal safety coupler according to claim 1. The dependent claims describe preferred embodiments of the invention.

The features and advantages of the universal safety coupler according to the present invention will be apparent from the following description, given by way of non-limiting example, according to the accompanying figures, in which:
- Figure 1 shows a sectional view of an embodiment of the universal safety coupler according to the present invention;
- Figure 2A shows an axonometric view of a component of the universal safety coupler according to the present invention, in particular of a connection portion 103;
- Figure 2B shows a partial sectional view of the component in Figure 2A;

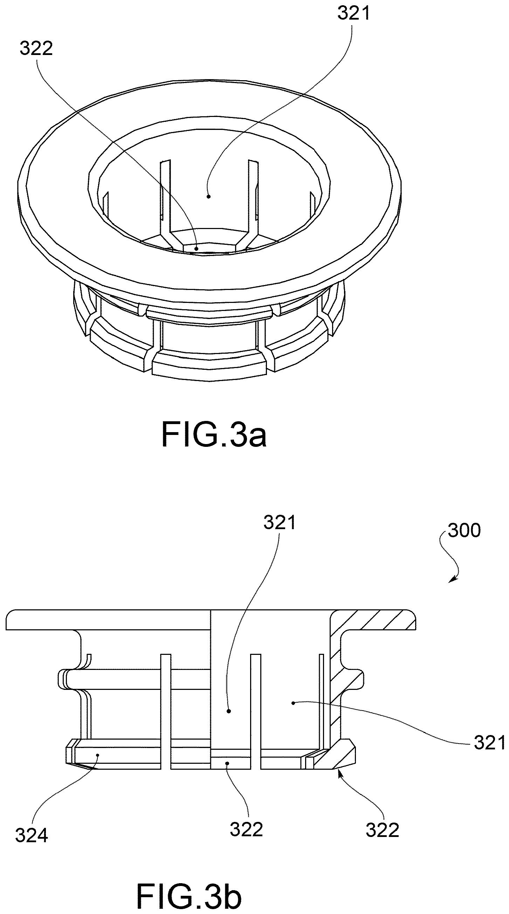

- Figure 3A shows an axonometric view of a component of the universal safety coupler according to the present invention, in particular of a holding element integrated in a thrust element of the safety mechanism;
- Figure 3B shows a partial sectional view of the component in Figure 3A;
- Figures 4A to 4C show the coupling steps of a known connector in a universal safety coupler according to the present invention;
- Figures 5A to 5C show the coupling steps of a known connector in a universal safety coupler according to the present invention;
- Figure 6 shows an axonometric and partial sectional view of a known connector and of the universal safety coupler in Figure 1;
- Figure 7 shows a partial sectional view of a further embodiment of the universal safety coupler according to the present invention;
- Figure 8 shows a partial sectional view of a component of the universal safety coupler according to the present invention, in particular of a fastening component of the safety mechanism;
- Figure 9 shows a top view of a component of the universal safety coupler according to the present invention, in particular of a holding element of the safety mechanism;
- Figure 10 shows a partial sectional view of a component of the universal safety coupler according to the present invention, in particular of a thrust element of the safety mechanism.

With particular reference to the drawings, reference numeral 100 globally indicates a universal safety coupler according to the present invention.

The universal safety coupler 100 is of the type for quick connect fluid connectors and, more specifically, for quick connect hydraulic and pneumatic connectors. Advantageously, the universal safety coupler 100 integrates the features of a universal coupler with the features of a safety coupler.

The universal safety coupler 100 may be used in a pressurized fluid system: the universal safety coupler 100 is associated/associable with an upstream pressurized system and is intended to receive a connector 200 of a downstream pressurized system. Coupler 100 is the female component and connector 200 is the male component.

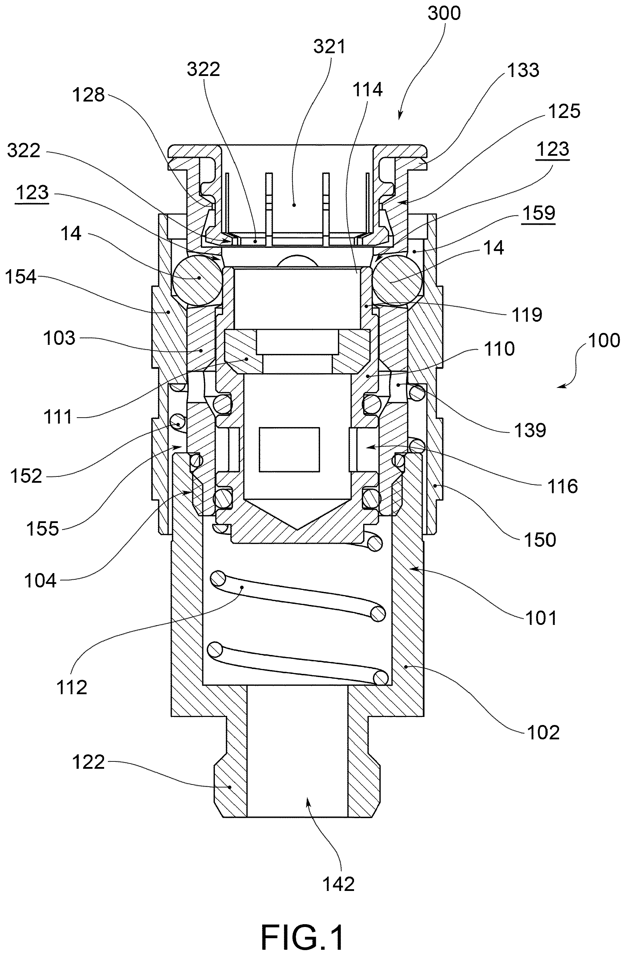

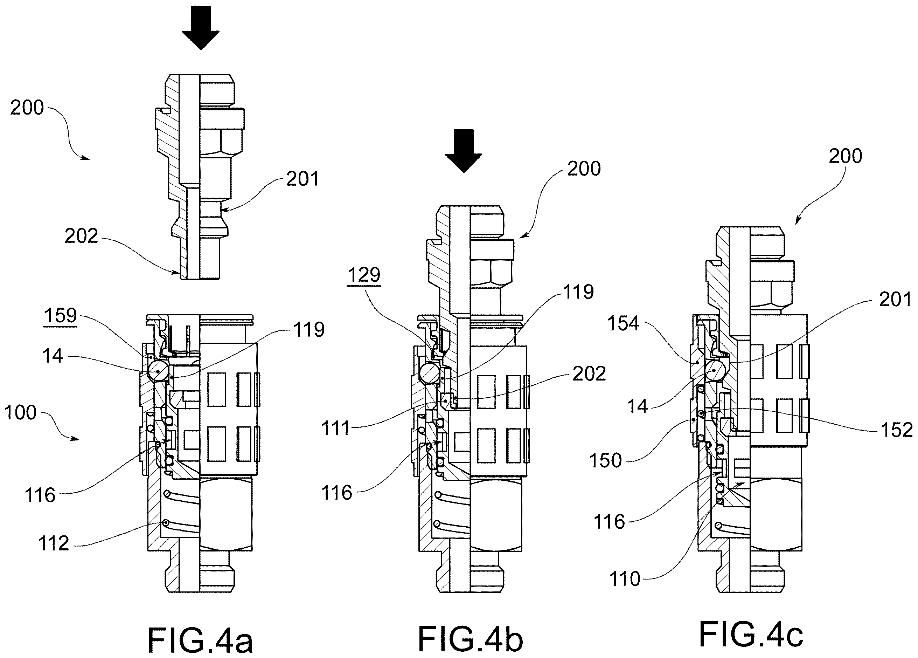

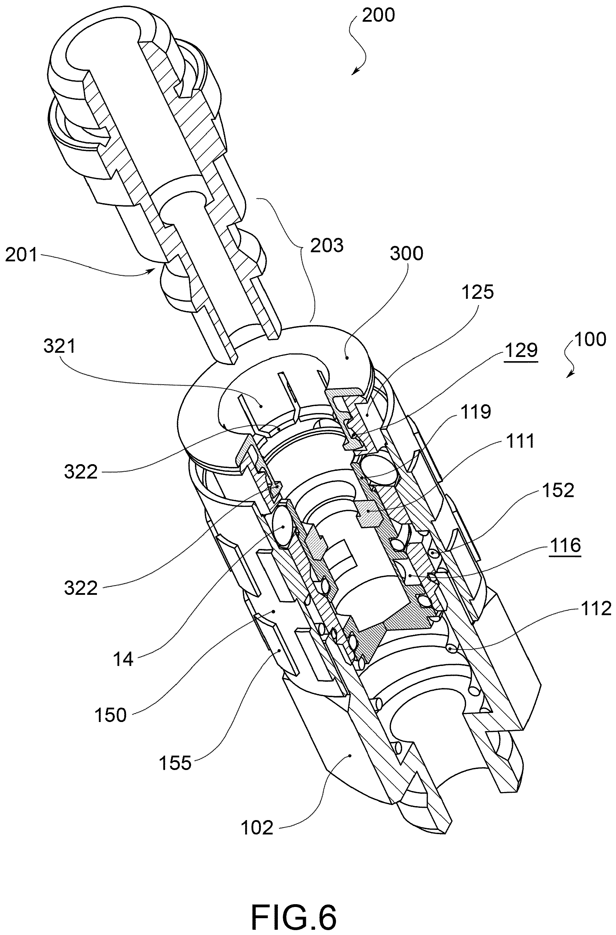

Connector 200, shown for example in Figures 1 and 6, comprises a head 203 provided with a groove 201 intended to interact with a quick connection mechanism of coupler 100 to allow the connection and disconnection of connector 200 to/from coupler 100. The head 203 of connector 200 comprises an abutment end 202 adapted to actuate an internal valve 110 of coupler 100 between a closed position (as in Figure 4A) and an open position (as in Figure 4C).

The universal safety coupler 100 comprises an essentially cylindrical and internally hollow main body 101. An internal valve 110 is slidingly longitudinally housed in the main body 101. Valve 110 has a hollow body provided with an inlet opening 114 and an outlet opening 116 and internally houses at least one sealing ring 111 adapted to create a seal with the head 203 of connector 200. Valve 110 is thrust (upwards) by means of a resilient element 112, e.g. a spring, in closed position (i.e. in closed position of the outlet opening 116 under sealed conditions) when no connector 200 has been completely inserted (Figure 4A). When the head 203 of connector 200 is inserted into coupler 100 (Figure 4B), the abutment end 202 pushes valve 110 sliding downwards up to reaching the open position (in which the outlet opening 116 is free), shown in Figure 4C.

The main body 101 comprises a connection portion 102 intended to obtain the pressurized connection with an upstream pressurized system and a connection portion 103 intended to obtain the pressurized connection with connector 200.

In an embodiment, the connection portion 102 and the connection portion 103 are two separate portions joined under sealed conditions in a joining area 104 (e.g. threaded) to form the main body 101 of coupler 100.

The connection portion 102 is substantially cylindrical and internally hollow and preferably is made of metal, for example of copper or anodized aluminum. Spring 112 adapted to thrust valve 110 into closing position is housed in the connection portion 102. The connection portion 102 defines an inlet area 122 provided with an inlet opening 142, adapted to be connected, for example by threading or other type of connection, to a conduit (not shown) connected to an upstream source of pressurized fluid.

The connection portion 103 is substantially cylindrical and internally hollow. The connection portion 103 holds valve 110 in a sliding manner.

The universal safety coupler 100 comprises a quick connect mechanism to allow the connection and disconnection of connector 200.

The quick connect mechanism comprises a collar 150 which enables/disables a locking element which engages the groove 201 of connector 200 to hold it in sealed connection inside coupler 100, as shown in Figure 4C. In the embodiment shown in the drawings, the locking element consists of a plurality of beads 14. The locking beads 14 are preferably made of metal, e.g. stainless steel.

Collar 150 is essentially cylindrical and internally hollow. Collar 150 slips over the outside of the main body 101, longitudinally slides thereon and can be manually actuated to allow the release of connector 200. Collar 150 is thrust by means of a resilient element 152, e.g. a spring, in holding position of connector 200, shown in Figure 4C. Spring 152 is housed in a chamber 155 defined between collar 150 and the main body 101.

Collar 150 comprises a thrust portion 154 for thrusting the locking element (e.g. the locking beads 14) into groove 201 on the head of connector 200 to hold it in sealed connection inside coupler 100, as shown in Figure 4C.

Collar 150 can be manually actuated by pulling it downwards, i.e. in direction opposite to connector 200, to release the locking element (e.g. the locking beads 14) out of groove 201 on the head of connector 200. Thereby, connector 200 is no longer held in connection in sealed connection inside coupler 100 by the quick connect mechanism, which indeed is disabled.

Advantageously, as shown in Figure 6, collar 150 is externally provided, i.e. at the outer surface, with protuberances 156 (or knurlings or projections) adapted to facilitate the gripping by friction of a protective sheath which may fit on coupler 100. The protective sheath, for example made of rubber or other soft polymeric material, is fit on coupler 100 to protect the surfaces of the objects surrounding the coupler, for example the bodywork of the machinery in a workshop, against accidental impact with the coupler itself.

As shown in Figure 1, the internal valve 110 comprises, at the inlet opening 114, a neck 119 which acts as a barrier to hold the locking element (e.g. the locking beads 14) in position in a seat 159 made in collar 150 when coupler 100 is in a rest position (Figure 4A), i.e. without any connector 200 inserted therein.

When the head 203 of connector 200 is inserted into coupler 100 (Figure 4B), the abutment end 202 thrusts valve 110 sliding downwards up to freeing the locking element (e.g. the locking beads 14), which is thrust, by the thrust portion 154 of collar 150, into groove 201 on the head of connector 200 to hold it in sealed connection inside coupler 100, as shown in Figure 4C.

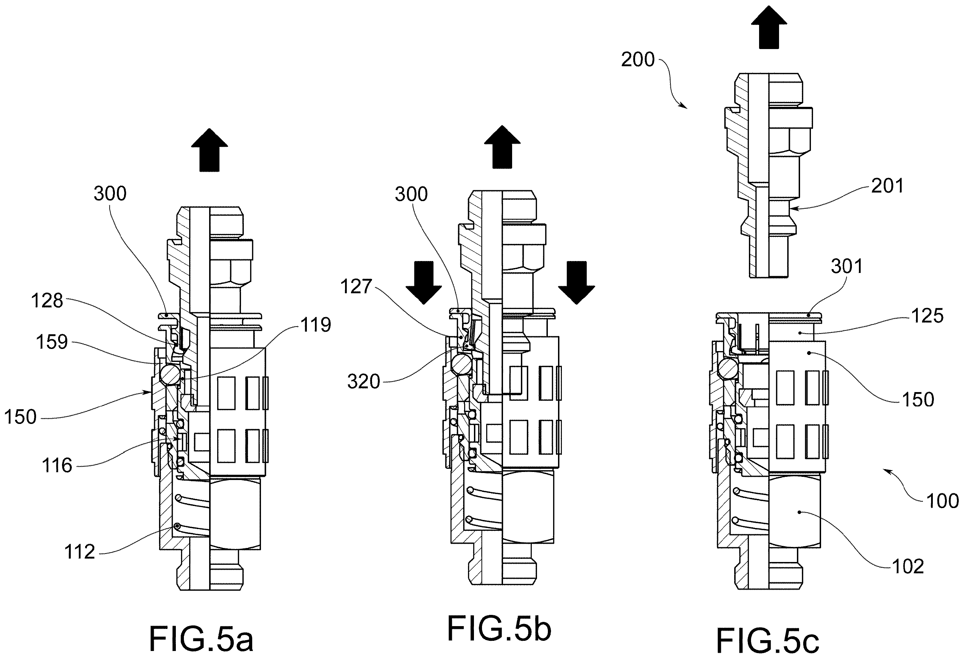

When the head 203 of connector 200 is removed from coupler 100, valve 110 is thrust upwards by spring 112, up to reaching the closed position (in which opening 116 is closed), shown in Figure 5A. During its stroke, the internal valve 110, and neck 119 in particular, thrusts the locking element (e.g. the locking beads 14) into the seat 159 of collar 150.

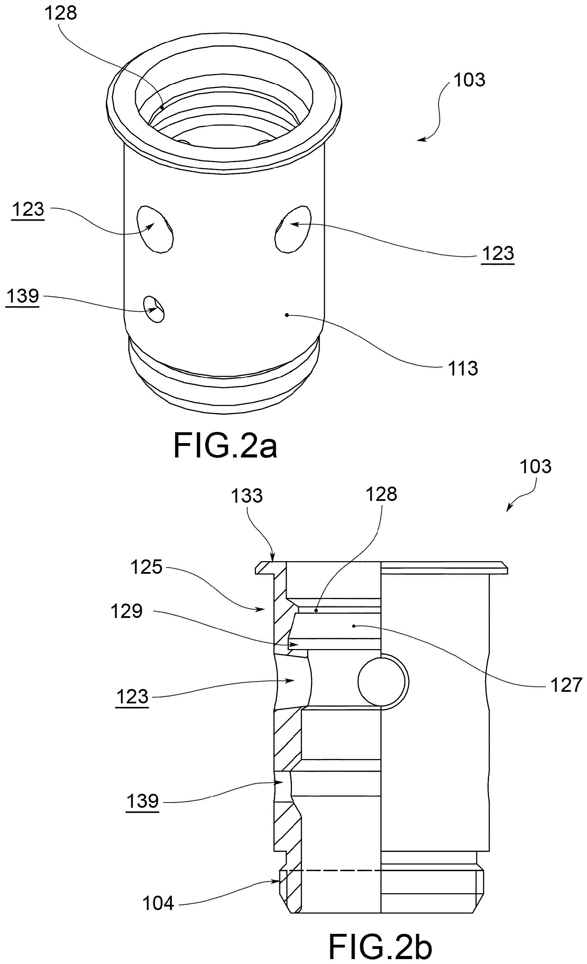

Figure 2A shows in detail the connection portion 103, which at least partially houses the locking element for connector 200.

The connection portion 103 comprises a connection body 113 provided with at least one through opening 123, which radially extends through said body 113, the through opening intended to receive the locking element therein.

The connection portion 103 preferably comprises a plurality of openings 123 evenly circumferentially arranged on body 113. The openings 123 preferably are arranged in an upper portion of body 113.

In the example shown in the drawings, the openings 123 are adapted to receive the locking beads 14 therein.

The connection portion 103 comprises at least one through-vent hole 129 which radially extends through said body 113. The vent hole 129 is preferably arranged in a lower portion of body 113.

In the example in Figure 2A, the connection portion 103 comprises a pair of opposing breather holes 129, i.e. made on opposite sides of body 113.

The connection portion 103 comprises, at the end intended to receive connector 200, a neck 125 ending in an outwards-facing circular flange 133.

The universal safety coupler 100 further comprises a safety mechanism adapted to prevent the involuntary release of connector 200 even after collar 150 is actuated and valve 110 is closed by this time, as shown in Figure 5A.

The safety mechanism comprises a thrust element 300, 47 which can be manually actuated, which enables/disables a holding element engaging the groove 201 of connector 200 to hold it in coupler 100, as shown in Figure 5A.

The thrust element 47, 300 of the safety mechanism is held in position in coupler 100 by a fastening component 128, 452.

In the embodiment in Figure 1, the fastening component is made as a single piece with the connection portion 103. For example, the fastening component is stop 128, protruding inside the neck 125 of the connection portion 103 to hold the thrust element of the safety mechanism in coupler 100.

In such an example, neck 125 comprises, facing the inside of the connection portion 103, a slide 127 ending at an upper end with stop 128 and defining a chamber 129 below stop 128. Slide 127 has an inclination directed towards the inside of coupler 100.

In such an example, neck 125 guides the movement of the thrust element 300 and slide 127 guides the movement of the holding element.

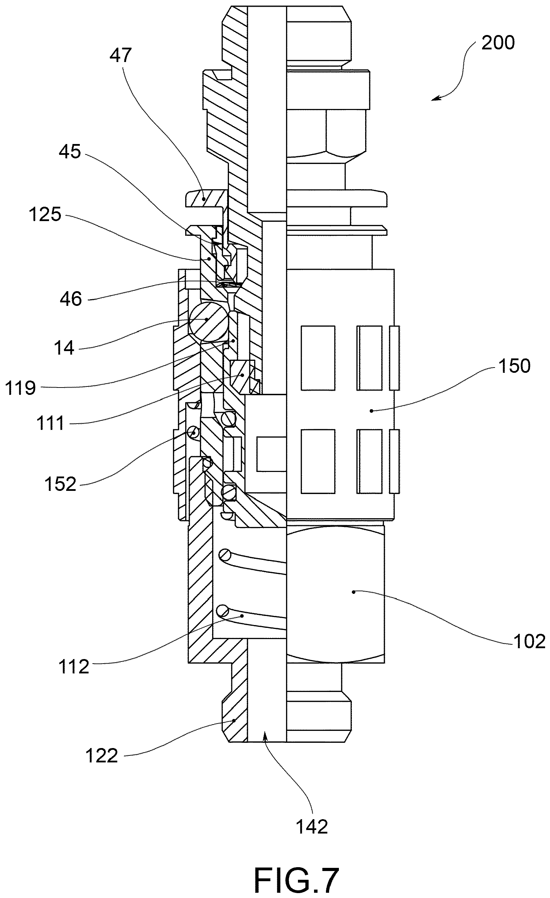

In the embodiment in Figure 7, the fastening component is a separate element from the connection portion 103.

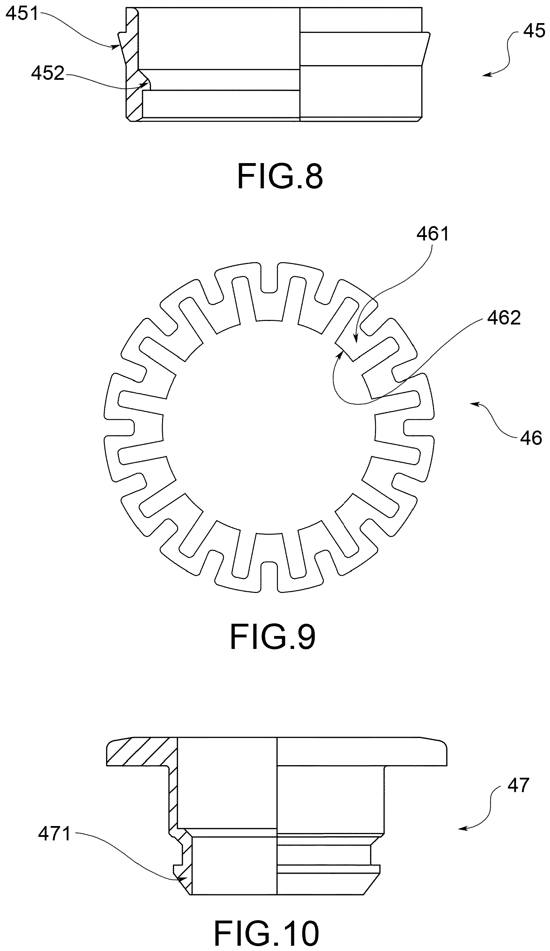

For example, the fastening component is a spacer 45 (shown in detail in Figure 8) fastened (for example mechanically, with an undercut 451) inside the neck 125 of the connection portion 103. Spacer 45 is a substantially cylindrical and internally hollow element. In such an example, spacer 45 comprises an internally protruding stop 452 for holding the thrust element of the safety mechanism in coupler 100.

The thrust element 47, 300 is at least partially inserted in the main body 101 and in particular, in the connection portion 103 at neck 125.

The thrust element 47, 300 is substantially cylindrical and internally hollow and is intended to receive the head 203 of connector 200.

The thrust element 47, 300 enables and disables the holding element intended to be inserted in the groove 201 of connector 200.

The holding element can be actuated between:
- a holding configuration of connector 200, for holding it in coupler 100 even after collar 150 is actuated and valve 110 is closed by this time, as shown in Figure 5A;
- a release configuration of connector 200, to allow the extraction thereof from coupler 100, as shown in Figure 5C.

The holding element comprises an elastic portion 321, 461 connected to an abutment element 322, 462.

The holding element comprises a plurality of elastic portions 321, 461 (e.g. of legs), each provided with a stop 322, 462.

When the head 203 of connector 200 is inserted into coupler 100 (Figure 4B), stop 322, 462 is thrust by connector 200 towards an open position to allow the passage of head 203. Thrust by the elastic element 321, 461, stop 322, 462, at the groove 201 of connector 200, returns to the initial closed position and is inserted into the groove to hold the head 203 of connector 200.

Connector 200 is safely held in coupler 100 by stop 322, 462 after collar 150 is actuated and valve 110 is closed by this time, as shown in Figure 5A, also in the presence of residual pressure in coupler 100 (which would tend to externally thrust the connector). In the meantime, the air in the system may be completely released through the breather hole 129 of the connection portion 103.

At this point, there is a need to thrust the thrust element 47, 300 downwards (in the insertion direction into coupler 100) in order to disable the holding element and release connector 200, as shown in Figure 5B. The thrust element 47, 300 moves stop 322, 462 towards an open position to allow the passage of head 203 and therefore the connector 200 exiting coupler 100.

In the embodiment in Figure 1, the thrust element and the holding element are made as a single piece, i.e. they make a substantially cylindrical and internally hollow single body called gripper 300.

In such an example, gripper 300 (which makes the thrust element) is provided with a plurality of elastic portions 321 (legs), each provided with an internally protruding stop 322 (foot) (which makes the holding element).

With particular reference to the configuration in Figure 1, when connector 200 is inserted into coupler 100, stop 322 is housed in the chamber 129 of neck 125 and therefore has free space to freely translate. The elastic element 321 allows the translation (in opening) for the passage of head 203. Thrust by the elastic element 321, stop 322, at the groove 201 of connector 200, moves again (in closing) inside the groove to hold the head 203 of connector 200. Connector 200 is safely held in coupler 100, even after collar 150 is actuated and valve 110 is closed by this time. Indeed, while head 203 of the connector attempts to slide towards the outside of coupler 100, it drags with it the thrust element 300 exiting neck 125 of the connection portion 103. In such a movement, stop 322 slides along slide 127 of the collar and is guided into the groove 201 of connector 200, up to abutting against the stop 128 of neck 125. In order to release connector 200, there is a need to thrust the thrust element 300 downwards (in the insertion direction into coupler 100), as shown in Figure 5B. By thrusting the thrust element 300 towards the inside of coupler 100, stop 322 slides along slide 127 towards the inside of chamber 129, where it has free space to translate in opening and allow the passage of head 203.

In the embodiment in Figure 7, the thrust element 47 and the holding element 46 are distinct and separate elements.

The thrust element 47 is substantially cylindrical and internally hollow; the holding element 46 is an elastic washer notched internally, and preferably also externally.

In such an example, the thrust element 47 comprises a thrust end 471 intended to engage the holding element 46; the holding element 46 comprises a plurality of elastic portions 461 (legs), each provided with an internally protruding stop 462 (foot).

With particular reference to the configuration in Figure 7, stop 462 is thrust in closing by the elastic element 461 into the groove to hold the head 203 of connector 200. In order to release connector 200, there is a need to thrust the thrust element 47 downwards (in the insertion direction into coupler 100) so that the inner teeth (stops 462) of the elastic washer 46 are folded so as to allow the passage of head 203 and remove connector 200.

Summarizing the operation of the universal safety coupler 100, when connector 200 is inserted in coupler 100, the internal valve 110 is open so that a pressurized flow is free to pass therethrough. In such a configuration, connector 200 is mechanically locked in coupler 100 by the locking element of the quick connect mechanism, which acts on groove 201 formed in the head 203 of connector 200. When the head 203 of connector 200 is completely inserted in coupler 100, connector 200 is pneumatically connected with the upstream pressurized system through the internal valve 110. The quick connect mechanism of coupler 100 is arranged so as to ensure the universality of the coupler, i.e. so that coupler 100 can receive a plurality of shapes and sizes of connector 200. The universal safety coupler 100 further comprises a safety mechanism adapted to prevent the involuntary release of connector 200 even after the quick connect mechanism is disabled and valve 110 is closed by this time. In such a configuration, the safety mechanism holds connector 200 in coupler 100 even in the presence of residual pressure in coupler 100 (which tends to externally thrust the connector), and in the meantime the air in the system may be completely released through the breather hole 129 of the connection portion 103. In order to disable the safety mechanism and release connector 200, there is a need to thrust the thrust element 47, 300 downwards (in the insertion direction into the coupler 100), thus disabling stop 322, 462 to allow the passage of head 203, and therefore of connector 200 exiting coupler 100.

Innovatively, the universal safety coupler 100 according to the present invention in many applications may replace the conventional couplers and safety couplers on the market, while improving the features thereof. By virtue of the presence of the safety mechanism, the safety of the operator and the system in the step of connector 200 being released may be ensured while maintaining coupling quickness.

Advantageously, a universal safety coupler according to the present invention prevents the problem of pipe whipping, while maintaining all the other essential functions, such as the air flow rate, volumes and the interchangeability of the various profiles of the connector.

It is apparent that the person skilled in the art may modify the object described above, without departing from the scope of protection as defined by the following claims.

## Claims

1. A universal safety coupler (100) intended to receive a connector of a pressurized system, said coupler (100) being the female component and said connector being the male component provided with a groove, said coupler (100) comprising:
- a main body (101) inside which is housed an internal valve (110) which can be actuated from a closed position to an open position, said main body (101) comprising a connection portion (103) intended to receive the connector;
- a quick connect mechanism to allow for the connection and disconnection of the connector under sealed conditions, said mechanism comprising a collar (150) slipping over the outside of the main body (101), sliding longitudinally thereon, and which can be actuated manually to enable/disable at least one locking element (14) engaging with the groove of the connector;
- a safety mechanism for preventing the release of the connector even after the collar (150) has been actuated to allow for disconnection of the connector, said safety mechanism comprising a thrust element (47, 300) placed inside the connection portion (103), sliding longitudinally therein, which can be actuated to enable/disable a holding element engaging with the groove of the connector,
**characterized in that** the holding element comprises a plurality of elastic portions (321, 461), each of which provided with a stop (322, 462).

2. A universal safety coupler (100) according to claim 1, in which the thrust element (47, 300) of the safety mechanism is held in position inside the coupler (100) by a fastening component.

3. A universal safety coupler (100) according to claim 2, in which said fastening component is a stop (128) made as a single piece together with and inside the connection portion (103) in order to hold the thrust element of the safety mechanism inside the coupler (100).

4. A universal safety coupler (100) according to claim 2, in which the fastening component is a spacer (45) fastened internally to the connection portion (103), said spacer (45) being provided with a stop (452) protruding internally in order to hold the thrust element of the safety mechanism inside the coupler (100).

5. A universal safety coupler (100) according to any one of the previous claims, in which the thrust element and the holding element are made of a single part.

6. A universal safety coupler (100) according to any one of claims from 1 to 4, in which the thrust element (47) and the holding element (46) are separate elements, and said holding element (46) is an elastic washer notched internally and preferably also externally.

7. A universal safety coupler (100) according to any one of the previous claims, in which the locking element consists of a plurality of beads (14), preferably made of metal.

8. A universal safety coupler (100) according to any one of the previous claims, in which the collar (150) comprises a thrust portion (154) for thrusting the locking element (14) into the groove of the connector.

9. A universal safety coupler (100) according to any one of the previous claims, in which the collar (150) is provided with protuberances (156) on the outside for facilitating the gripping by friction of a protective sheath fitting and/or suitable for fitting at least partially thereon.

10. A universal safety coupler (100) according to any one of the previous claims, in which the internal valve (110) comprises a neck (119) that acts as a barrier to hold the locking element (14) in position inside a seat (159) made in the collar (150) when the coupler (100) is in a rest position.

11. A universal safety coupler (100) according to any one of the previous claims, in which the connection portion (103) is provided with at least one through-opening (123) intended to receive therein the locking element (14).

12. A universal safety coupler (100) according to any one of the previous claims, in which the connection portion (103) comprises at least one through-breather hole (129).

## Patentansprüche

1. Universeller Sicherheitskoppler (100), der zur Aufnahme eines Steckverbinders eines Drucksystems bestimmt ist, wobei der Koppler (100) die Buchsenkomponente ist und der Steckverbinder die Steckerkomponente, versehen mit einer Kerbe, ist, wobei der Koppler (100) Folgendes umfasst:
- einen Hauptkörper (101), in dem ein inneres Absperrorgan (110) untergebracht ist, das aus einer Schließstellung in eine Öffnungsstellung betätigt werden kann, wobei der Hauptkörper (101) einen Verbindungsabschnitt (103) umfasst, der zur Aufnahme des Steckverbinders bestimmt ist,
- einen Schnellverbindungsmechanismus, der die Verbindung und Trennung des Steckverbinders unter abgedichteten Bedingungen ermöglicht, wobei der Mechanismus einen Kragen (150) umfasst, der über die Außenseite des Hauptkörpers (101) gestülpt ist, in Längsrichtung darauf gleitet und manuell betätigt werden kann, um mindestens ein Verriegelungselement (14), das in die Kerbe des Steckverbinders eingreift, zu aktivieren/deaktivieren,
- einen Sicherheitsmechanismus zum Verhindern der Freigabe des Steckverbinders selbst nachdem der Kragen (150) betätigt wurde, um eine Trennung des Steckverbinders zu ermöglichen, wobei der Sicherheitsmechanismus ein Schubelement (47, 300) umfasst, das in dem Verbindungsabschnitt (103), in Längsrichtung darin gleitend, platziert ist, das betätigt werden kann, um ein Halteelement, das in die Nut des Steckverbinders eingreift, zu aktivieren/deaktivieren,
**dadurch gekennzeichnet, dass** das Halteelement eine Vielzahl von elastischen Abschnitten (321, 461) umfasst, von denen jeder mit einem Anschlag (322, 462) versehen ist.

2. Universeller Sicherheitskoppler (100) nach Anspruch 1, wobei das Schubelement (47, 300) des Sicherheitsmechanismus durch eine Befestigungskomponente an seiner Position in dem Koppler (100) gehalten wird.

3. Universeller Sicherheitskoppler (100) nach Anspruch 2, wobei die Befestigungskomponente ein Anschlag (128) ist, der zusammen mit und in dem Verbindungsabschnitt (103) als ein einzelnes Stück hergestellt ist, um das Schubelement des Sicherheitsmechanismus in dem Koppler (100) zu halten.

4. Universeller Sicherheitskoppler (100) nach Anspruch 2, wobei die Befestigungskomponente ein Abstandshalter (45) ist, der innenliegend an dem Verbindungsabschnitt (103) befestigt ist, wobei der Abstandshalter (45) mit einem Anschlag (452) versehen ist, der nach innen vorsteht, um das Schubelement des Sicherheitsmechanismus in dem Koppler (100) zu halten.

5. Universeller Sicherheitskoppler (100) nach einem beliebigen der vorhergehenden Ansprüche, wobei das Schubelement und das Halteelement aus einem einzelnen Teil hergestellt sind.

6. Universeller Sicherheitskoppler (100) nach einem beliebigen der Ansprüche 1 bis 4, wobei das Schubelement (47) und das Halteelement (46) separate Elemente sind, und das Halteelement (46) eine elastische Scheibe ist, die innen und vorzugsweise auch außen eingekerbt ist.

7. Universeller Sicherheitskoppler (100) nach einem beliebigen der vorhergehenden Ansprüche, wobei das Verriegelungselement aus einer Vielzahl von Wulsten (14) besteht, die vorzugsweise aus Metall hergestellt sind.

8. Universeller Sicherheitskoppler (100) nach einem beliebigen der vorhergehenden Ansprüche, wobei der Kragen (150) einen Schubabschnitt (154) zum Einschieben des Verriegelungselements (14) in die Kerbe des Steckverbinders umfasst.

9. Universeller Sicherheitskoppler (100) nach einem beliebigen der vorhergehenden Ansprüche, wobei der Kragen (150) mit Vorsprüngen (156) an der Außenseite zur Erleichterung des Festhaltens durch Reibung eines Schutzmantels vorgesehen ist, der zumindest teilweise darauf aufgesetzt ist und/oder geeignet ist, zumindest teilweise darauf aufgesetzt zu werden.

10. Universeller Sicherheitskoppler (100) nach einem beliebigen der vorhergehenden Ansprüche, wobei das innere Absperrorgan (110) einen Hals (119) umfasst, der als eine Barriere fungiert, um das Verriegelungselement (14) an seiner Position in einem Sitz (159), der in dem Kragen (150) ausgebildet ist, zu halten, wenn sich der Koppler (100) in einer Ruhestellung befindet.

11. Universeller Sicherheitskoppler (100) nach einem beliebigen der vorhergehenden Ansprüche, wobei der Verbindungsabschnitt (103) mit mindestens einer Durchgangsöffnung (123) versehen ist, die zur Aufnahme des Verriegelungselements (14) darin bestimmt ist.

12. Universeller Sicherheitskoppler (100) nach einem beliebigen der vorhergehenden Ansprüche, wobei der Verbindungsabschnitt (103) mindestens ein Durchgangsentlüftungsloch (129) umfasst.

## Revendications

1. Coupleur (100) universel de sécurité destiné à recevoir un connecteur d'un système sous pression, ledit coupleur (100) étant le composant femelle et ledit connecteur étant le composant mâle pourvu d'une rainure, ledit coupleur (100) comprenant :
- un corps principal (101) à l'intérieur duquel est logée une soupape interne (110) qui peut être actionnée d'une position fermée à une position ouverte, ledit corps principal (101) comprenant une partie de connexion (103) destinée à recevoir le connecteur ;
- un mécanisme de connexion rapide pour permettre la connexion et la déconnexion du connecteur dans des conditions d'étanchéité, ledit mécanisme comprenant un collier (150) glissant sur l'extérieur du corps principal (101) et coulissant longitudinalement sur celui-ci, et qui peut être actionné manuellement pour activer/désactiver au moins un élément de verrouillage (14) qui se met en prise avec la rainure du connecteur ;
- un mécanisme de sécurité pour empêcher la libération du connecteur même après que le collier (150) a été actionné pour permettre la déconnexion du connecteur, ledit mécanisme de sécurité comprenant un élément de poussée (47, 300) placé à l'intérieur de la partie de connexion (103) et coulissant longitudinalement à l'intérieur, qui peut être actionné pour activer/désactiver un élément de maintien qui se met en prise avec la rainure du connecteur,
**caractérisé en ce que** l'élément de maintien comprend une pluralité de parties élastiques (321, 461), chacune d'entre elles étant pourvue d'une butée (322, 462).

2. Coupleur (100) universel de sécurité selon la revendication 1, dans lequel l'élément de poussée (47, 300) du mécanisme de sécurité est maintenu en position à l'intérieur du coupleur (100) par un composant de fixation.

3. Coupleur (100) universel de sécurité selon la revendication 2, dans lequel ledit composant de fixation est une butée (128) réalisée d'un seul tenant avec la partie de connexion (103) et à l'intérieur de celle-ci, afin de maintenir l'élément de poussée du mécanisme de sécurité à l'intérieur du coupleur (100).

4. Coupleur (100) universel de sécurité selon la revendication 2, dans lequel le composant de fixation est une entretoise (45) fixée à l'intérieur de la partie de connexion (103), ladite entretoise (45) étant pourvue d'une butée (452) faisant saillie à l'intérieur afin de maintenir l'élément de poussée du mécanisme de sécurité à l'intérieur du coupleur (100).

5. Coupleur (100) universel de sécurité selon l'une quelconque des revendications précédentes, dans lequel l'élément de poussée et l'élément de maintien sont réalisés d'un seul tenant.

6. Coupleur (100) universel de sécurité selon l'une quelconque des revendications de 1 à 4, dans lequel l'élément de poussée (47) et l'élément de maintien (46) sont des éléments séparés, et ledit élément de maintien (46) est une rondelle élastique crantée à l'intérieur et de préférence aussi à l'extérieur.

7. Coupleur (100) universel de sécurité selon l'une quelconque des revendications précédentes, dans lequel l'élément de verrouillage est constitué d'une pluralité de billes (14), de préférence réalisées en métal.

8. Coupleur (100) universel de sécurité selon l'une quelconque des revendications précédentes, dans lequel le collier (150) comprend une partie de poussée (154) pour pousser l'élément de verrouillage (14) dans la rainure du connecteur.

9. Coupleur (100) universel de sécurité selon l'une quelconque des revendications précédentes, dans lequel le collier (150) est pourvu de saillies (156) à l'extérieur pour faciliter la saisie par frottement d'une gaine de protection s'ajustant et/ou adaptée pour s'ajuster au moins partiellement sur celui-ci.

10. Coupleur (100) universel de sécurité selon l'une quelconque des revendications précédentes, dans lequel la soupape interne (110) comprend un col (119) qui agit comme une barrière pour maintenir l'élément de verrouillage (14) en position à l'intérieur d'un siège (159) ménagé dans le collier (150) lorsque le coupleur (100) est en position de repos.

11. Coupleur (100) universel de sécurité selon l'une quelconque des revendications précédentes, dans lequel la partie de connexion (103) est pourvue d'au moins une ouverture traversante (123) destinée à recevoir l'élément de verrouillage (14) à l'intérieur.

12. Coupleur (100) universel de sécurité selon l'une quelconque des revendications précédentes, dans lequel la partie de connexion (103) comprend au moins un trou d'évent traversant (129).
